# EUROPÄISCHE PATENTSCHRIFT

(11) **EP 0 438 633 B1**
(45) Veröffentlichungstag und Bekanntmachung des Hinweises auf die Patenterteilung: **29.12.1993**
(21) Anmeldenummer: 90115978.0
(22) Anmeldetag: 21.08.1990
(51) Int. Cl.: B60S 1/08

(54) **Verfahren und Anordnung zur Steuerung eines Scheibenwischers**
Method and means of controlling a windscreen wiper
Procédé et moyens de commande d'une essuie-glace

(30) Priorität: 12.01.1990 DE 4000735
(43) Veröffentlichungstag der Anmeldung: 31.07.1991
(73) Patentinhaber: VDO Adolf Schindling AG, D-60487 Frankfurt (DE)
(72) Erfinder: Wallrafen, Werner, D-6231 Sulzbach (DE)
(74) Vertreter: Klein, Thomas, Dipl.-Ing. (FH)

(56) Entgegenhaltungen:
- EP-A- 0 136 984
- WO-A-83/02093
- WO-A-89/00119
- DE-A- 2 630 470
- US-A- 4 703 237
- US-A- 4 705 998
- US-A- 4 740 735

## Beschreibung

Die Erfindung betrifft ein Verfahren und eine Anordnung zum selbsttätigen Umschalten zwischen Einzel- und Dauerwischen für regenabhängige Scheibenwischersteuerungen, insbesondere für Kraftfahrzeuge, wobei ein Regensensor an der zu wischenden Scheibe im Bereich des Scheibenwischers ein Sensorsignal in Abhängigkeit von der Feuchtigkeitsmenge abgibt, dessen zeitliche Änderung detektiert wird.

Es sind Einrichtungen zur Steuerung von Scheibenwischern bekanntgeworden, bei welchen beim Erreichen einer vorgegebenen Feuchtigkeitsmenge auf der Frontscheibe der Scheibenwischermotor selbständig anläuft.

Gemäß WO 89/00119 ist ein Verfahren zum regenabhängigen Ein- und Ausschalten eines elektrischen Scheibenwischers bekannt. Dabei liefert ein auf der Windschutzscheibe befindlicher Sensor ein von der Feuchtigkeit abhängiges Sensorsignal, dessen zeitliche Änderung gemessen wird. Bei Überschreitung einer vorgegebenen Amplitude des Sensorsignals und gleichzeitiger zeitlicher Amplitudenzunahme im Sensorsignal wird der Scheibenwischermotor eingeschaltet. Bei Nichterfüllung einer der beiden Bedingungen wird der Scheibenwischermotor abgeschaltet.

Für eine optimale Sicht ist es jedoch wichtig, den Betrieb des Scheibenwischers an die jeweilige Regenstärke anzupassen, was durch Ein- und Ausschalten, Verändern der Intervalle zwischen einzelnen Wischvorgängen, Verändern der Geschwindigkeit und/oder Umschalten zwischen einem intermittierenden Betrieb (Einzelwischen) oder einem kontinuierlichen Betrieb (Dauerwischen) erfolgen kann.

Aufgabe der vorliegenden Erfindung ist es, eine automatische Anpassung der Steuerung eines Scheibenwischers an die Regenstärke zuverlässig zu ermöglichen. Die Aufgabe ist gelöst durch die Merkmale des Anspruchs 1.

Gemäß dem erfindungsgemäßen Verfahren wird die zeitliche Änderung des Sensorsignals, nachdem der Scheibenwischer den Sensor passiert hat, ermittelt und zur Steuerung des Scheibenwischers herangezogen. Die Erfindung ermöglicht die Ableitung eines zuverlässigen Maßes für die Regenstärke.

Bei einer zeitlichen Änderung des Sensorsignals oberhalb einer vorgegebenen Schwelle wird ein kontinuierlicher Betrieb des Scheibenwischers bewirkt und Bei einer zeitlichen Änderung des Sensorsignals unterhalb der vorgegebenen Schwelle auf einen intermittierenden Betrieb umgeschaltet.

Von Vorteil ist, daß mit einfachen Mitteln fortlaufend die Kriterien für eine Umschaltung zwischen Dauerwischen und Einzelwischen überwacht werden. Dieses gilt sowohl während des kontinuierlichen Betriebs, bei welchem bei nachlassendem Regen auf intermittierenden Betrieb umzuschalten ist, als auch bei intermittierendem Betrieb in Hinblick auf ein Umschalten auf kontinuierlichen Betrieb bei stärker werdendem Regen.

Eine Weiterbildung des erfindungsgemäßen Verfahrens besteht darin, daß eine große zeitliche Änderung des Sensorsignals mit einem Vorzeichen, das eine schlagartige Verringerung der Feuchtigkeitsmenge bedeutet, als Passieren des Scheibenwischers gedeutet wird und daß nach einer vorgegebenen Zeit ein Zeitfenster zur Auswertung der zeitlichen Änderung des Sensorsignals aktiviert wird.

Durch diese Weiterbildung ist eine Festlegung des Zeitpunktes für die Auswertung der zeitlichen Änderung des Sensorsignals auch bei kontinuierlichem Betrieb möglich, wenn nämlich ansonsten kein Signal zur Erkennung der jeweiligen Position des Scheibenwischers vorliegt.

Gemäß der Erfindung wird nach einer fest vorgegebenen Zeit nach einem Wischereinschaltsignal die zeitliche Änderung des Sensorsignals ausgewertet. Hierdurch ist in vorteilhafter Weise die Festlegung des Zeitpunktes für die Auswertung der zeitlichen Änderung des Sensorsignals bei intermittierendem Betrieb möglich.

Um bei Regenstärken im Grenzbereich ein zu häufiges Umschalten zwischen intermittierendem und kontinuierlichem Betrieb zu verhindern, ist gemäß einer anderen Weiterbildung vorgesehen, daß das Umschalten in einem Bereich erfolgt, wobei ein dritter Schwellwert zum Umschalten von kontinuierlichem Betrieb auf intermittierenden Betrieb niedriger ist als ein zum Umschalten von intermittierendem Betrieb auf kontinuierlichen Betrieb dienender vierter Schwellwert.

Das Starten des Scheibenwischermotors bei intermittierendem Betrieb kann nach verschiedenen Verfahren erfolgen. Eine Weiterbildung der Erfindung sieht dazu vor, daß nach einer durch eine zeitliche Änderung, die kleiner als die vorgegebene Schwelle ist, bedingten Einstellung auf intermittierenden Betrieb der Scheibenwischermotor gestartet wird, wenn das Sensorsignal einen zweiten vorgegebenen Schwellwert erreicht.

Die zeitliche Änderung des Sensorsignals kann gemäß einer weiteren Fortbildungen der Erfindung auch zu einer Steuerung der Länge der Intervalle zwischen einzelnen Wischvorgängen oder zur Steuerung der Geschwindigkeit des Scheibenwischers benutzt werden.

Durch die in weiteren Unteransprüchen aufgeführten Maßnahmen sind vorteilhafte Anordnungen zur Durchführung des im Hauptanspruch angegebenen Verfahrens möglich.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: ein Blockschaltbild einer Anordnung zur Durchführung des erfindungsgemäßen Verfahrens,
- Fig. 2: ein Flußdiagramm eines für den Mikrocomputer in der Anordnung nach Fig. 1 vorgesehenen Programms, und
- Fig. 3: Beispiele für Zeitdiagramme des Sensorsignals und der Spannung am Scheibenwischermotor für Einzelwischen und Dauerwischen.

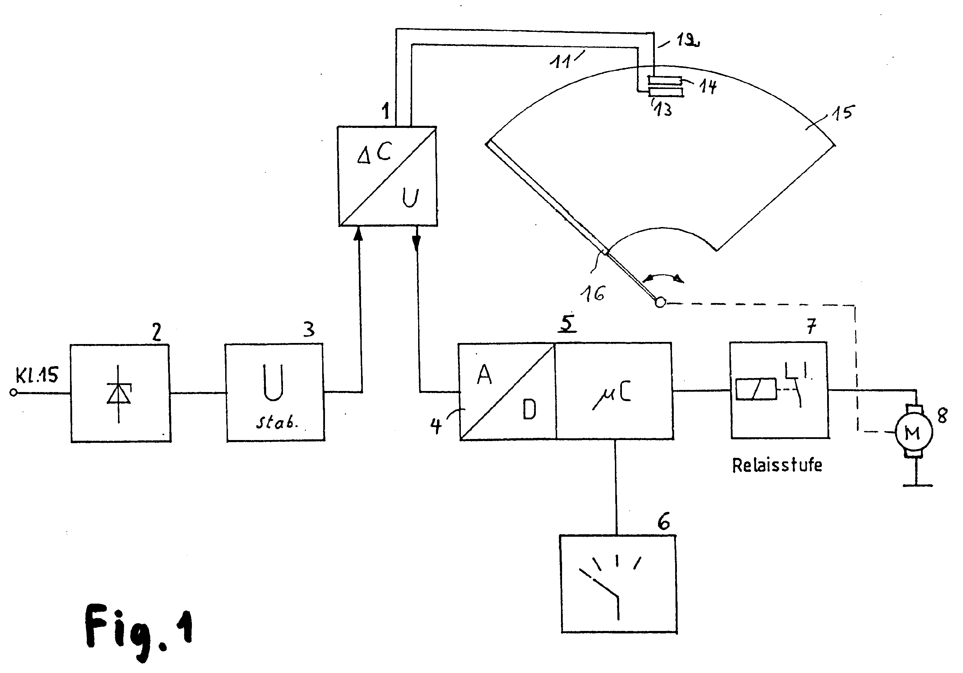

Bei der in Fig. 1 dargestellten Einrichtung wird der Grad der Benetzung der Frontscheibe mit Hilfe eines kapazitiven Sensors ermittelt, der im wesentlichen aus Kondensatorplatten 13, 14 besteht, die über Leitungen 11, 12 mit einer Schaltung 1 verbunden sind, die in an sich bekannter Weise eine durch die Benetzung der Scheibe verursachte Kapazitätsänderung in ein elektrisches Signal umwandelt. Der Schaltung 1 wird über die Klemme 15 des Bordnetzes, über ein Störspannungsfilter 2 und über eine Stabilisierungsschaltung 3 Betriebsspannung zugeführt. Die Ausgangsspannung der Schaltung 1 - im folgenden Sensorsignal S genannt - wird einem Analog/Digital-Wandler 4 eines sogenannten Einchip-Mikrocomputers 5 zugeführt.

Der Mikrocomputer 5 ist mit einem Bedienschalter 6 verbunden, der vorzugsweise als Lenkstockschalter ausgeführt ist und rastende Stellungen für Dauerbetrieb und automatischen Betrieb sowie eine Taststellung für einen einmaligen Wischvorgang aufweist. Über eine Relais-Stufe 7 ist der Motor 8 an einen Ausgang des Mikrocomputers 5 angeschlossen. Der Scheibenwischermotor 8 ist über einen nicht dargestellten Antrieb in an sich bekannter Weise mit einem Wischerarm 16 verbunden, der das zu wischende Feld 15 überstreicht.

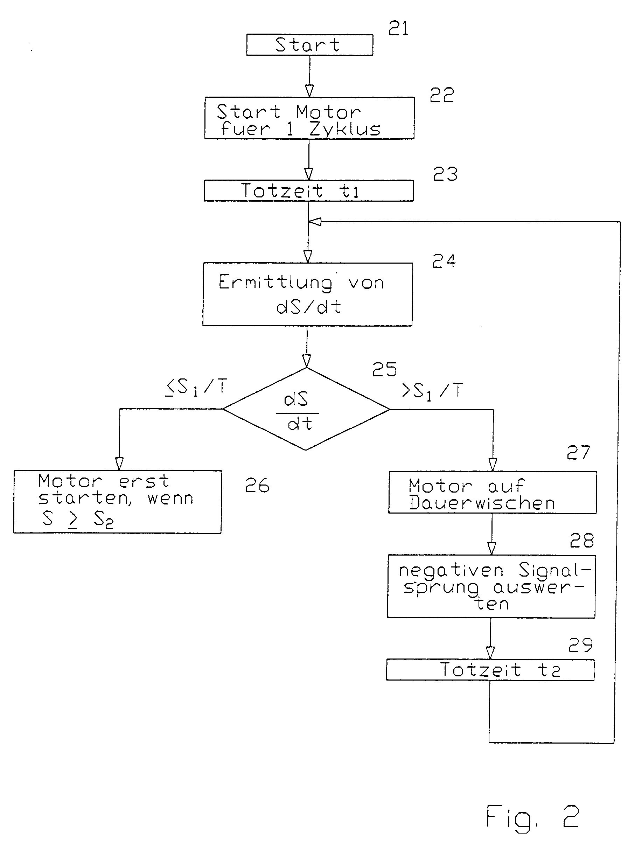

Bei dem in Fig. 2 dargestellten Programm wird nach einem Start bei 21 im Programmteil 22 der Scheibenwischermotor 8 (Fig. 1) für einen Zyklus aktiviert. Nach dem Ablauf einer Totzeit t₁ im Programmteil 23 wird bei 24 die zeitliche Änderung dS/dt des Sensorsignals S ermittelt. Dieses erfolgt in an sich bekannter Weise dadurch, daß zu aufeinanderfolgenden Zeitpunkten jeweils ein Wert des Sensorsignals abgefragt und die Differenz der Werte gebildet wird. Sofern der zeitliche Abstand der Abfragen konstant ist, kann dabei die Division durch dt unterbleiben. Bei der anschließenden Verzweigung 25 wird geprüft, ob die zeitliche Änderung dS/dt der Sensorsignals kleiner oder größer als eine vorgegebene Schwelle S₁/T ist. Ist die zeitliche Änderung dS/dt des Sensorsignals nicht größer als erste die Schwelle S₁/T, wird bei 26 ein Programm aktiviert, welches den Scheibenwischermotor erst dann startet, wenn die Regenstärke einen zweiten vorgegebenen Schwellwert S₂ erreicht.

Ist bei der Verzweigung 25 jedoch die zeitliche Änderung dS/dt des Sensorsignals größer als die vorgegebene erste Schwelle S₁/T, wird der Scheibenwischermotor bei 27 auf Dauerwischen geschaltet. Während dieser Betriebsart wird im anschließenden Programmteil 28 fortlaufend geprüft, ob das Sensorsignal eine große negative zeitliche Änderung aufweist. Dieses ist der Fall, wenn der Scheibenwischer den Sensor (13, 14, Fig. 1) überstreicht. Zu diesem mit dem Programmteil 28 ermittelten Zeitpunkt wird eine weitere Totzeit t₂ bei 29 gestartet, nach deren Ablauf im Programmteil 24 erneut die Ermittlung der zeitlichen Änderung des Sensorsignals durchgeführt wird.

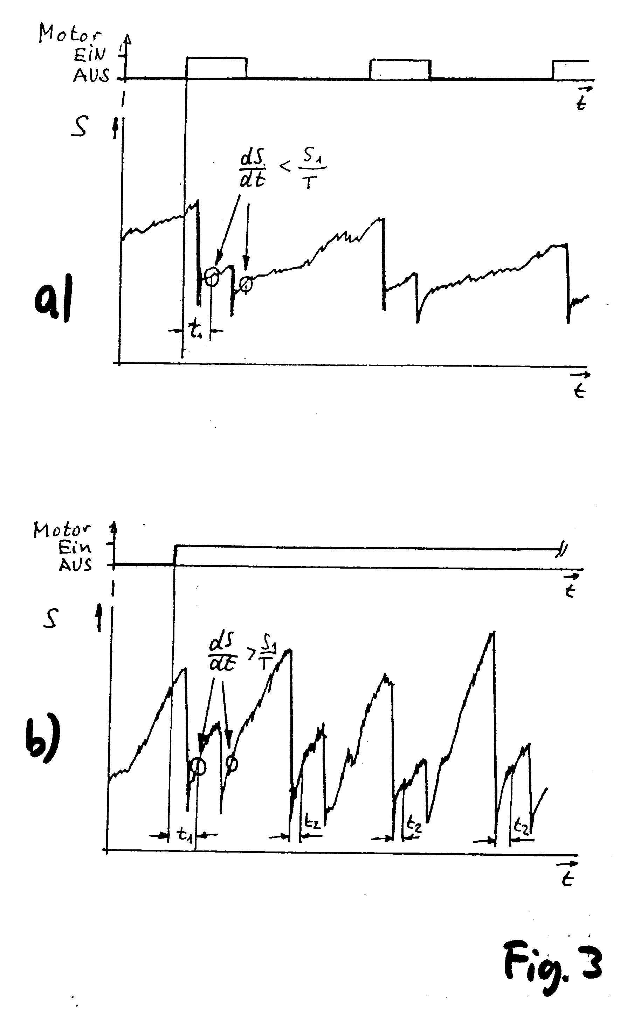

Fig. 3a) zeigt den zeitlichen Verlauf des Sensorsignals S bei schwächerem Regen und den Einschaltzustand des Scheibenwischermotors beim Einzelwischen. Jedes Mal, wenn der Scheibenwischer den Sensor passiert, ergibt sich durch die wasserentfernende Wirkung des Scheibenwischers ein negativer Signalsprung. Durch die Anordnung des Sensors im Bereich des Wischfeldes 15 (Fig. 1) erfolgen zwei derartige Signalsprünge kurze Zeit aufeinander. Nach der Totzeit t₁ wird die zeitliche Änderung des Sensorsignals S ermittelt. Ist diese gering - wie bei Fig. 3a) - verbleibt es beim Einzelwischen. Der Scheibenwischermotor wird jedes Mal dann gestartet, wenn das Sensorsignal S den zweiten vorgegebenen Schwellwert S₂ überschreitet. Nach einem Wischvorgang wird der Motor wie bei herkömmlichen Scheibenwischeranlagen automatisch angehalten.

Bei dem in Fig. 3b) dargestellten Dauerwischen wird nach dem Einschalten des Scheibenwischermotors eine hohe zeiliche Änderung des Sensorsignals S festgestellt, worauf Dauerwischen eingeschaltet wird. Während des Dauerwischens erfolgt jedoch ständig um eine Zeitdauer t₂ nach den hohen negativen Signalsprüngen verzögert eine Überprüfung der zeitlichen Änderung des Sensorsignals, was in den Figuren durch Kreise dargestellt ist.

## Patentansprüche

1. Verfahren zum selbsttätigen Umschalten zwischen Einzel-und Dauerwischen für regenabhängige Scheibenwischersteuerungen, insbesondere für ein Kraftfahrzeug, wobei ein Regensensor (13, 14) an der zu wischenden Scheibe (15) im Bereich des Scheibenwischers (16) ein Sensorsignal (S) in Abhängigkeit von der Feuchtigkeitsmenge abgibt, dessen zeitliche Änderung (dS/dt) detektiert wird, dadurch gekennzeichnet, daß nach einer vorgegebenen Zeit (t₁, t₂) nachdem der Scheibenwischer (16) den Sensor (13, 14) passiert hat, ein Zeitfenster zur Auswertung der zeitlichen Änderung (dS/dt) des Sensorsignals (S) aktiviert wird und bei einer zeitlichen Änderung (dS/dt) des Sensorsignals (S) oberhalb einer ersten positiven Schwelle (S₁/T) ein kontinuierlicher Betrieb des Scheibenwischers (16) bewirkt wird, während bei einer zeitlichen Änderung (dS/dt) des Sensorsignals (S) unterhalb der positiven Schwelle (S₁/T) auf einen intermittierenden Betrieb umgeschaltet wird.

2. Verfahren nach Anspruch 1, dadurch gekennzeichnet, daß eine große zeitliche Änderung (dS/dt) des Sensorsignals (S) mit einem Vorzeichen, das eine schlagartige Verringerung der Feuchtigkeitsmenge bedeutet, als Passieren des Scheibenwischers gedeutet wird.

3. Verfahren nach Anspruch 1, dadurch gekennzeichnet, daß nach einer fest vorgegebenen Zeit (t₁) nach einem Wischereinschaltsignal die zeitliche Änderung (dS/dt) des Sensorsignals (S) ausgewertet wird.

4. Verfahren nach Anspruch 1, dadurch gekennzeichnet, daß nach der durch eine zeitliche Änderung (dS/dt) des Sensorsignals (S), die kleiner als die erste positive Schwelle (S₁/T) ist, bedingten Einstellung auf intermittierenden Betrieb der Scheibenwischermotor (8) gestartet wird, wenn das Sensorsignal (S) einen zweiten Schwellwert (S₂) erreicht.

5. Verfahren nach Anspruch 1, dadurch gekennzeichnet, daß die Umschaltung zwischen kontinuierlichem und intermittierenden Betrieb in einem Bereich erfolgt, der von einem dritten niedrigeren, die Umschaltung von kontinuierlichen auf intermittierenden Betrieb gewährleistenden Schwellwert und einem vierten höheren, die Umschaltung von intermittierenden auf kontinuierlichen Betrieb ermöglichenden Schwellwert begrenzt wird.

6. Verfahren nach Anspruch 1, dadurch gekennzeichnet, daß in Abhängigkeit von der zeitlichen Änderung (dS/dt) des Sensorsignals (S) die Länge der Intervalle zwischen einzelnen Wischvorgängen gesteuert wird.

7. Verfahren nach Anspruch 1, dadurch gekennzeichnet, daß in Abhängigkeit von der zeitlichen Änderung (dS/dt) des Sensorsignals (S) die Geschwindigkeit des Scheibenwischers (16) gesteuert wird.

8. Anordnung zur Durchführung des Verfahrens nach Anspruch 1, dadurch gekennzeichnet, daß der Sensor (13, 14) über einen Analog/Digital-Wandler (4) mit einem Mikrocomputer (5) verbunden ist und daß für den Mikrocomputer (5) ein Programm nach dem erfindungsgemäßen Verfahren vorgesehen ist.

9. Anordnung nach Anspruch 8, dadurch gekennzeichnet, daß der Sensor ein kapazitiver Feuchtesensor (13, 14) ist.

## Claims

1. Method of automatically switching over between single wipes and continuous wiping for rain-dependent window wiper control systems, especially for a motor vehicle, wherein a rain sensor (13, 14) on the window (15) being wiped in the region of the window wiper (16) emits a sensor signal (S) in dependence on the moisture quantity, and the variation of the said signal with respect to time (dS/dt) is detected, characterised in that after a predetermined time (t₁, t₂) after the window wiper (16) has passed the sensor (13, 14) a time window is activated for evaluating the time variation (dS/dt) of the sensor signal (S), and in the event of variation with time (dS/dt) of the sensor signal (S) above a first positive threshold (S₁/T) continuous operation of the window wiper (16) is brought about, whereas in the event of a variation with time (dS/dt) of the sensor signal (S) below the positive threshold (S₁/T) there is a change-over to intermittent operation.

2. Method according to claim 1, characterised in that a considerable variation with time (dS/dt) of the sensor signal (S) with a preceding sign which signifies a sudden reduction of the moisture quantity is interpreted as the passing of the window wiper.

3. Method according to claim 1, characterised in that after a fixedly predetermined time (t₁) after a wiper switch-on signal the variation with time (dS/dt) of the sensor signal (S) is evaluated.

4. Method according to claim 1, characterised in that after adjustment to intermittent operation caused by a variation with time (dS/dt) of the sensor signal (S) which is smaller than the first positive threshold (S₁/T) the window wiper motor (8) is started when the sensor signal (S) reaches a second threshold value (S₂).

5. Method according to claim 1, characterised in that the switching-over between continuous and intermittent operation is effected in a range which is defined by a third lower threshold value which ensures switch-over from continuous to intermittent operation and by a fourth higher threshold value which permits switch-over from intermittent to continuous operation.

6. Method according to claim 1, characterised in that the length of the intervals between individual wiping operations is controlled in dependence on the variation with time (dS/dt) of the sensor signal (S).

7. Method according to claim 1, characterised in that the speed of the window wiper (16) is controlled in dependence on the variation with time (dS/dt) of the sensor signal (S).

8. Arrangement for carrying out the method according to claim 1, characterised in that the sensor (13, 14) is connected via an analog-to-digital converter (4) to a microcomputer (5), and that a programme according to the method according to the invention is provided for the microcomputer (5).

9. Arrangement according to claim 8, characterised in that a capacitive moisture sensor (13, 14) is used as the sensor.

## Revendications

1. Procédé de commutation automatique, en fonction de la force de la pluie, entre le fonctionnement intermittent et le fonctionnement en continu du dispositif de commande d'un essuie-glace, pour automobile notamment, dans lequel un capteur hygrométrique (13, 14) disposé sur le pare-brise (15), dans la surface balayée par l'essuie-glace (16), délivre en fonction de la teneur en humidité un signal (S), dont la variation dans le temps (dS/dt) est décelée, procédé caractérisé en ce que, après un intervalle de temps (t₁, t₂) prédéterminé après que l'essuie-glace (16) soit passé sur le capteur (13, 14), une fenêtre dans le temps, destinée à évaluer la variation dans le temps (dS/dt) du signal (S) de ce capteur est formée et, si la variation dans le temps (dS/dt) du signal (S) est supérieure a la valeur d'un premier seuil (S₁/T) positif, elle provoque le balayage en continu de l'essuie-glace (16), tandis que, si la variation dans le temps (dS/dt) du signal (S) est inférieure à la valeur de ce premier seuil (S₁/T) positif, elle provoque une commutation vers le balayage intermittent.

2. Procédé selon la revendication 1, caractérisé en ce qu'une forte variation dans le temps (dS/dt) du signal (S) du capteur, affectée d'un signe qui indique une réduction brusque de la teneur en humidité, est interprétée comme indiquant le passage de l'essuie-glace (sur le capteur).

3. Procédé selon la revendication 1, caractérisé en ce que la variation dans le temps (dS/dt) du signal (S) du capteur est estimée après un intervalle de temps (t₁) prédéterminé et fixe succédant à un signal de mise en marche de l'essuie-glace.

4. Procédé selon la revendication 1, caractérisé en ce que, après un réglage sur le fonctionnement intermittent dû au fait que la variation dans le temps (dS/dt) du signal (S) du capteur est inférieure à la valeur du premier seuil (S₁/T) positif, le moteur (8) de l'essuie-glace est mis en marche lorsque la valeur du signal (S) du capteur est supérieure à un second seuil (S₂).

5. Procédé selon la revendication 1, caractérisé en ce que la commutation entre les fonctionnement en continu et intermittent a lieu dans une zone qui est délimitée par un troisième seuil plus petit, qui assure le passage du fonctionnement en continu au fonctionnement intermittent et par un quatrième seuil plus élevé, qui permet de passer, du fonctionnement intermittent au fonctionnement en continu.

6. Procédé selon la revendication 1, caractérisé en ce que la longueur de l'intervalle de temps qui sépare deux balayages est réglable en fonction de la variation dans le temps (dS/dt) du signal (S) du capteur.

7. Procédé selon la revendication 1, caractérisé en ce que la vitesse de l'essuie-glace (16) est réglable en fonction de la variation dans le temps (dS/dt) du signal (S) du capteur.

8. Circuit pour la mise en oeuvre du procédé selon la revendication 1, caractérisé en ce que le capteur (13, 14) est connecté à un microordinateur (5) par l'entremise d'un convertisseur (4) analogique/numérique et en ce qu'il est prévu pour ce microordinateur (5) un programme conforme au procédé selon l'invention.

9. Circuit selon la revendication 8, caractérisé en ce que le capteur est un capteur hygrométrique capacitif (13, 14).
